# EUROPÄISCHE PATENTSCHRIFT

(11) **EP 0 537 590 B1**
(45) Veröffentlichungstag und Bekanntmachung des Hinweises auf die Patenterteilung: **07.02.1996**
(21) Anmeldenummer: 92117003.1
(22) Anmeldetag: 06.10.1992
(51) Int. Cl.: C08F 10/00, C08F 4/62

(54) **Phillips-Katalysator und seine Verwendung zur Herstellung von Ethylenhomopolymerisaten und -copolymerisaten**
Phillips catalyst and use thereof for the manufacture of ethylene polymers and copolymers
Catalyseur Phillips et son utilisation pour la préparation de polymères et copolymères de l'éthylène

(30) Priorität: 16.10.1991 DE 4134146
(43) Veröffentlichungstag der Anmeldung: 21.04.1993
(73) Patentinhaber: BASF Aktiengesellschaft, D-67063 Ludwigshafen (DE)
(72) Erfinder: Funk, Guido, Dr., W-6520 Worms 1 (DE); Weber, Siegfried, Dr., W-6940 Weinheim (DE); Evertz, Kaspar, Dr., W-6707 Schifferstadt (DE); Mueller, Hans-Joachim, Dr., W-6718 Gruenstadt (DE); Saive, Roland, Dr., W-6700 Ludwigshafen (DE); Konrad, Rainer, Dr., W-6701 Goennheim (DE)

(56) Entgegenhaltungen:
- EP-A- 0 055 863
- EP-A- 0 055 864
- EP-A- 0 264 895
- EP-A- 0 372 328
- FR-A- 2 291 985
- FR-A- 2 303 812
- FR-A- 2 391 773

## Beschreibung

Die vorliegende Erfindung betrifft einen neuen Phillips-Katalysator für die Homopolymerisation von Ethylen und die Copolymerisation von Ethylen mit α-Olefinen, enthaltend als katalytisch wirksame Komponenten einen feinteiligen, Aluminiumsilikat-geträgerten, phosphorhaltigen Chromkatalysator und mindestens einen metallorganischen Cokatalysator.

Geträgerte Chromkatalysatoren bilden einen Teil der katalytisch wirksamen Komponenten der Phillips-Katalysatoren, wie sie bekanntermaßen für die Polymerisation oder Copolymerisation von Ethylen und/oder α-Olefinen nach dem Suspensionspolymerisationsverfahren angewendet werden. Neben Silicagel und Aluminiumphosphat werden auch Aluminiumoxid-Siliciumoxid-Cogele oder Aluminiumsilikat-Gele als Träger in den Chromkatalysatoren angewandt (vgl. die US-A-2 825 721, die US-A-2 930 789 oder die DE-A-24 55 535). Bei der Herstellung der Chromkatalysatoren können außer Chrom noch Phosphorverbindungen auf die feinteiligen Aluminiumsilikat-Gele aufgetragen werden. Üblicherweise werden hierfür Phosphorsäure (vgl. die US-A-2 945 015) oder phosphororganische Verbindungen wie Alkylphosphate (vgl. die DE-A-25 02 940) angewandt. Diese Phosphorverbindungen können unter den bei der Herstellung der Katalysatorvorstufen angewandten Bedingungen mit dem üblicherweise verwendeten Chromtrioxid zu chrom- und phosphorhaltigen Verbindungen reagieren, welche letztendlich auf die Aluminiumsilikat-Gele aufgetragen werden. Indes weisen die Phillips-Katalysatoren, welche diese bekannten Chromkatalysatoren als katalytisch wirksame Komponenten enthalten, nur eine geringe Produktivität auf, was das Auswaschen der Katalysatorreste aus den erhaltenen Polymerisaten erforderlich macht. Außerdem ist die Verwendung des carcinogenen Chromtrioxids bei der Herstellung dieser Phillips-Katalysatoren ein schwerwiegender Nachteil.

Daneben sind Phillips-Katalysatoren bekannt, welche feinteilige, Silikat-geträgerte, phosphorhaltige Chromkatalysatoren enthalten, bei deren Herstellung das Silikatgel oder die phosphor- und chromhaltige Katalysatorvorstufe mit aluminiumorganischen Verbindungen behandelt werden (vgl. die DE-A-28 20 860 oder die DE-A-26 10 422). Die betreffenden Phillips-Katalysatoren liefern zwar Polymerisate mit hohen Schmelzindices, indes läßt ihre Produktivität noch stark zu wünschen übrig.

Hier hat der aus der EP-A-0 264 895 bekannte Phillips-Katalysator einen entscheidenden Fortschritt mit sich gebracht. Dieser Phillips-Katalysator liefert in deutlich höheren Ausbeuten Ethylenhomopolymerisate und -copolymerisate, welche sich außerdem noch durch eine gute Verarbeitbarkeit auszeichnen. Bei der Herstellung der betreffenden Chromkatalysatoren werden organische Phosphorverbindungen und die Reaktionsprodukte von Chrom(III)-acetylacetonato-Komplexen mit aluminiumorganischen Verbindungen auf Silikat-Gele aufgetragen. Die resultierenden Katalysatorvorstufen werden in üblicher und bekannter Weise aktiviert. Als Cokatalysatoren werden vor allem Gemische aus lithium- und bororganischen Verbindungen verwendet. Indes entspricht das Zähigkeitsniveau der mit Hilfe dieser Phillips-Katalysatoren hergestellten Polymerisate noch immer nicht allen Anforderungen des Marktes.

Aufgabe der vorliegenden Erfindung war es, einen neuen Phillips-Katalysator bereitzustellen, welcher die Nachteile des Standes der Technik nicht mehr länger aufweist und welcher in hoher Ausbeute Ethylenhomopolymerisate und -copolymerisate mit guten Verarbeitungseigenschaften und hohem Zähigkeitsniveau liefert.

Erfindungsgemäß konnte diese Aufgabe wirkungsvoll und elegant dadurch gelöst werden, daß man auf an sich bekannte Aluminiumsilikat-Hydrogele oder -Xerogele organische Phosphor(III)-, -(IV)- und -(V)-Verbindungen und Chrom(III)-Verbindungen aufträgt, wobei die Chrom(III)-Verbindungen mit den organischen Phosphorverbindungen unter den bei der Herstellung der Katalysatorvorstufe angewandten Reaktionsbedingungen nicht miteinander reagieren. Im Hinblick auf den Stand der Technik war es nicht zu erwarten gewesen, daß mit Hilfe dieser Maßnahme die gesteckten Ziele, insbesondere die Verbesserung des Zähigkeitsniveaus von Ethylenhomopolymerisaten und -copolymerisaten, erreicht werden konnten.

Demgemäß handelt es sich bei dem Gegenstand der vorliegenden Erfindung um einen neuen Phillips-Katalysator für die Homopolymerisation von Ethylen und die Copolymerisation von Ethylen mit α-Olefinen, enthaltend als katalytisch wirksame Komponenten
A) einen feinteiligen, Aluminiumsilikat-geträgerten, phosphorhaltigen Chromkatalysator, herstellbar, indem man
   (1) mindestens eine organische Phosphor(III)-, -(IV)- und/oder -(V)-Verbindung und mindestens eine Chrom(III)-Verbindung, welche mit den besagten Phosphorverbindungen unter den angewandten Reaktionsbedingungen nicht reagiert, in beliebiger Reihenfolge nacheinander oder gleichzeitig auf ein feinteiliges Aluminiumsilikat-Hydrogel oder -Xerogel mit einer Teilchengröße im Bereich von 1 bis 2000 µm unter Bildung einer Katalysatorvorstufe (A') aufträgt und
   (2) die Katalysatorvorstufe (A') bei höheren Temperaturen in einer oxidierenden Atmosphäre aktiviert, wodurch der Chromkatalysator (A) mit einem Atomverhältnis von Chrom:Phosphor von 20:1 bis 1:20, einem Gehalt an Chrom zwischen 0,01 und 5 Gew.-% und einem Gehalt an Phosphor zwischen 0,01 und 5 Gew.-% entsteht,
und
B) mindestens eine Verbindung der allgemeinen Formeln I bis IV,

   MR (I)

   M¹R² (II)

   M²R¹₃₋ₙXₙ (III)

   MM²RR¹₃ (IV)

   worin der Index und die Variablen die folgende Bedeutung haben:
   - M: Lithium, Natrium und Kalium,
   - M¹: Magnesium und Zink,
   - M²: Bor und Aluminium,
   - R: C₁- bis C₂₀-Alkyl und C₆- bis C₂₀-Aryl,
   - R¹: R und C₁- bis C₂₀-Alkoxy und C₆- bis C₂₀-Aryloxy,
   - X: Fluor, Chlor, Brom und Jod,
   - n: 0, 1 und 2;
   als Cokatalysator.

Im folgenden wird der neue Phillips-Katalysator für die Homopolymerisation von Ethylen und die Copolymerisation von Ethylen mit α-Olefinen der Kürze halber als "erfindungsgemäßer Phillips-Katalysator" bezeichnet.

Die erfindungsgemäß wesentliche katalytisch aktive Komponente des erfindungsgemäßen Phillips-Katalysators ist der neue, feinteilige, Aluminiumsilikat-geträgerte, phosphorhaltige Chromkatalysator (A), welcher durch Auftragen von organischen Phosphorverbindungen und Chromverbindungen auf ein an sich bekanntes feinteiliges Aluminiumsilikat-Hydrogel oder -Xerogel und durch Aktivieren der hierbei resultierenden Katalysatorvorstufe (A') bei höheren Temperaturen in einer oxidierenden Atmosphäre herstellbar ist.

Für den erfindungsgemäßen Phillips-Katalysator ist es indes wesentlich, daß man für die Herstellung des Chromkatalysators (A) mindestens eine Chrom(III)-Verbindung verwendet, welche unter den bei der Herstellung der Katalysatorvorstufe (A') angewandten Reaktionsbedingungen nicht mit den jeweils verwendeten organischen Phosphor (III)-, -(IV)- und/oder -(V)-Verbindungen reagiert. Beispiele geeigneter Chrom(III)-Verbindungen, welche dieses Anforderungsprofil erfüllen, sind wasserlösliche Salze des dreiwertigen Chroms und Chrom(III)-Chelatkomplexe. Beispiele gut geeigneter wasserlöslicher Salze des dreiwertigen Chroms sind Chrom(III)-nitrat und -acetat, von denen Chrom(III)-nitrat ganz besonders vorteilhaft ist und für die Herstellung der Chromkatalysatoren (A) ganz besonders bevorzugt verwendet wird. Beispiele gut geeigneter Chrom(III)-Chelatkomplexe sind die Acetylacetonatokomplexe der allgemeinen Formel V, 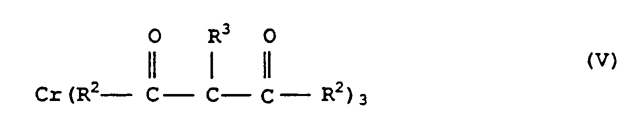
worin R² C₁- bis C₁₂-Alkyl und R³ für Wasserstoff oder einen Rest R² steht. Ein Beispiel für einen besonders gut geeigneten Chrom(III)-acetylacetonatokomplex ist Tris-acetylacetonato-chrom(III), welches ganz besonders vorteilhaft ist und für die Herstellung der Chromkatalysatoren (A) ganz besonders bevorzugt verwendet wird.

Für den erfindungsgemäßen Phillips-Katalysator ist es außerdem wesentlich, daß bei der Herstellung des Chromkatalysators (A) organische Phosphor(III)-, -(IV)- und/oder -(V)-Verbindungen verwendet werden. Hierbei kommen alle organischen Phosphorverbindungen der betreffenden Oxidationsstufen in Betracht, welche mit den vorstehend genannten Chrom(III)-Verbindungen unter den Bedingungen, welche bei der Herstellung der Katalysatorvorstufe (A') herrschen, nicht reagieren. Vorteilhafterweise handelt es sich bei den organischen Phosphor (III)-Verbindungen um Phosphorigsäureester. Beispiele geeigneter Phosphorigsäureester sind die Mono-, Di- und Trialkylphosphite, die Mono-, Di- und Triarylphosphite sowie die gemischten Alkylarylphosphite. Vorteilhafterweise handelt es sich bei den organischen Phosphor(IV)-Verbindungen um Phosphonsäureester. Beispiele geeigneter Phosphonsäureester sind die Mono- und die Dialkylester und die Mono- und Diarylester der Aryl- und Alkylphosphonsäuren sowie die Arylalkylester dieser Säuren. Vorteilhafterweise handelt es sich bei den organischen Phosphor (V)-Verbindungen um Phosphorsäureester. Beispiele geeigneter Phosphorsäureester sind die Mono-, Di- und Trialkylphosphate, die Mono-, Di- und Triarylphosphate sowie die gemischten Alkylarylphosphate. Beispiele gut geeigneter Phosphorverbindungen der vorstehend genannten Art sind Triethylphosphit, Triphenylphosphit, Methanphosphonsäuredimethylester und -diethylester, Ethanphosphonsäuredimethylester, Methanphosphonsäurediphenylester, Benzolphosphonsäuredimethylester und -diphenylester, Triphenylphosphat und Triethylphosphat, von denen Triethylphosphat ganz besonders vorteilhaft ist und deshalb für die Herstellung der Chromkatalysatoren (A) ganz besonders bevorzugt verwendet wird.

Für den erfindungsgemäßen Phillips-Katalysator ist es außerdem wesentlich, daß bei der Herstellung des erfindungsgemäß zu verwendenden Chromkatalysators (A) ein feinteiliges Aluminiumsilikat-Hydrogel oder -Xerogel verwendet wird. Hierbei ist unter feinteilig eine Teilchengröße im Bereich von 1 bis 2000 µm zu verstehen. Aluminiumsilikat-Hydrogele und -Xerogele, ihre Herstellung und ihre Verwendung sind aus der DE-A-24 55 535, der DE-A-29 45 015 und der US-A-2 852 721 bekannt. Üblicherweise werden diese Gele durch Neutralisation saurer, aluminiumionenhaltiger Wasserglaslösungen hergestellt. Die Neutralisation wird hierbei im allgemeinen so durchgeführt, daß sich ein Hydrogel bildet. Dieses kann durch azeotrope Destillation oder durch Auswaschen mit einem flüchtigen, mit Wasser mischbaren Lösungsmittel getrocknet werden. Daneben können aber auch übliche und bekannte Methoden wie z.B. die Sprühtrocknung oder die Ofentrocknung angewandt werden. Durch die Trocknung resultiert ein sogenanntes Xerogel, welches den Träger des Chromkatalysators (A) bildet.

Bekanntermaßen können in dieses Xerogel bei seiner Herstellung durch Cofällung Silicium-, Eisen- und/oder Borverbindungen eingebaut werden. Außerdem können auch noch die vorstehend genannten Phosphorverbindungen zugemischt werden.

Methodisch gesehen weist das Auftragen der erfindungsgemäß zu verwendenden Chrom- und Phosphorverbindungen auf das feinteilige Aluminiumsilikat-Hydrogel oder -Xerogel, d.h. die Herstellung der Katalysatorvorstufe (A') keine Besonderheiten auf, sondern kann in üblicher und bekannter Weise durch Suspendieren des Gels in einem organischen Lösungsmittel und Zugabe der Chrom- und Phosphorverbindungen erfolgen. Hierbei können die Chrom- und Phosphorverbindungen getrennt voneinander, in beliebiger Reihenfolge oder gleichzeitig aufgetragen werden. Handelt es sich bei den erfindungsgemäß zu verwendenden Chrom- und Phosphorverbindungen um feste Stoffe, werden sie zum Zwecke des Auftragens in geeigneten Lösungsmitteln gelöst. Sind die Chrom- und Phosphorverbindungen dagegen flüssig, kann auf die Verwendung eines Lösungsmittels verzichtet werden.

Im allgemeinen werden die Komponenten bei Raumtemperatur während 10 bis 120 Minuten miteinander vermischt. Anschließend wird das Suspensionsmittel innerhalb von 2 bis 10 Stunden abdestilliert, wodurch die Katalysatorvorstufe (A') resultiert.

Bei der Herstellung der Katalysatorvorstufe (A') werden die vorstehend genannten Chrom(III)-Verbindungen und die organischen Phosphorverbindungen in solchen Mengenverhältnissen angewandt, daß im fertigen Chromkatalysator (A) ein Atomverhältnis von Chrom:Phosphor von 20:1 bis 1:20 resultiert. Im allgemeinen empfiehlt es sich nicht, andere Atomverhältnisse zu wählen, weil hierdurch die katalytische Wirksamkeit des Chromkatalysators (A) nachteilig beeinflußt wird. Für den Chromkatalysator (A) ist es besonders vorteilhaft, bei der Herstellung der Katalysatorvorstufe (A') die Mengenverhältnisse von Chrom(III)-Verbindungen zu organischen Phosphorverbindungen so einzustellen, daß im fertigen Chromkatalysator (A) ein Atomverhältnis von Chrom:Phosphor von 6:1 bis 1:6 resultiert. Erfindungsgemäße Phillips-Katalysatoren, welche Chromkatalysatoren (A) eines solchen Chrom:Phosphor-Verhältnisses als katalytisch wirksame Komponente aufweisen, liefern Ethylenhomopolymerisate und -copolymerisate mit besonders vorteilhaftem Eigenschaftsprofil.

Unabhängig davon nach welcher Methode die Katalysatorvorstufe (A') hergestellt wird, werden die Mengen der erfindungsgemäß zu verwendenden Chrom(III)-Verbindungen und organischen Phosphorverbindungen so gewählt, daß der fertige Chromkatalysator (A) einen Gehalt an Chrom zwischen 0,01 und 5 Gew.-% und einen Gehalt an Phosphor zwischen 0,01 und 5 Gew.-% aufweist. Werden weniger als 0,01 Gew.-% an Phosphor oder Chrom verwendet, läßt die katalytische Wirksamkeit des betreffenden Phillips-Katalysators stark zu wünschen übrig. Dagegen rechtfertigt die weitere Steigerung der katalytischen Aktivität nicht die Erhöhung der Gehalte über 5 Gew.-% Chrom und 5 Gew.-% Phosphor hinaus. Demnach handelt es sich bei den Gewichtsbereichen von 0,01 bis 5 Gew.-% für Chrom und 0,01 bis 5 Gew.-% für Phosphor um optimale Bereiche, innerhalb derer der Chrom- und Phosphorgehalt des Chromkatalysators (A) breit variiert und den gegebenen technischen Bedingungen einerseits und dem gewünschten Eigenschaftsprofil der Ethylenhomopolymerisate und -copolymerisate andererseits angepaßt werden können. Innerhalb dieser optimalen Bereiche ist derjenige von 0,1 bis 2 Gew.-% Chrom und derjenige von 0,1 bis 3 Gew.-% Phosphor hervorzuheben, weil erfindungsgemäße Phillips-Katalysatoren, welche Chromkatalysatoren (A) eines solchen Chrom- und Phosphorgehalts aufweisen, besonders vorteilhaft sind. Als ganz besonders vorteilhaft erweisen sich die erfindungsgemäßen Phillips-Katalysatoren, deren Chromkatalysator (A) 0,5 bis 1,5 Gew.-% Chrom und 1 bis 2 Gew.-% Phosphor enthält. Hiervon sind wiederum diejenigen erfindungsgemäßen Phillips-Katalysatoren hervorzuheben, deren Chromkatalysator (A) das vorstehend genannte Atomverhältnis von Chrom:Phosphor von 6:1 bis 1:6 aufweist.

Bei der Herstellung des erfindungsgemäßen Phillips-Katalysators wird die Katalysatorvorstufe (A') bei höheren Temperaturen in einer oxidierenden Atmosphäre aktiviert, wodurch der erfindungsgemäß zu verwendende feinteilige, Aluminiumsilikat-geträgerte, phosphorhaltige Chromkatalysator (A) entsteht. Methodisch gesehen weist dieser Aktivierungsschritt keine Besonderheiten auf, sondern er kann in üblicher und bekannter Weise durch Erhitzen der Katalysatorvorstufe (A') auf Temperaturen von 300 bis 900, vorzugsweise 500 bis 750°C erfolgen. Bekanntermaßen wird hierbei die Katalysatorvorstufe (A') in einer oxidierenden Atmosphäre erhitzt. Beispiele geeigneter oxidierender Atmosphären sind reiner Sauerstoff, Sauerstoff-Edelgas-Gemische und Luft, von denen Luft aus Gründen der Wirtschaftlichkeit besonders bevorzugt verwendet wird. Im allgemeinen liegt die Aktivierungszeit bei 30 Minuten bis 24 Stunden, wobei eine Dauer von 1 bis 10 Stunden von Vorteil ist.

Der weitere wesentliche Bestandteil des erfindungsgemäßen Phillips-Katalysators ist mindestens ein Cokatalysator (B) der allgemeinen Formeln I bis IV.

In der allgemeinen Formel I bezeichnet die Variable M Lithium, Natrium und Kalium, von denen Lithium von Vorteil ist. Die Variable R steht für C₁- bis C₂₀-Alkyl oder C₆- bis C₂₀-Aryl, insbesondere für C₁- bis C₁₀-Alkyl und Phenyl.

In der allgemeinen Formel II bezeichnet die Variable M¹ Magnesium und Zink, von denen Magnesium vorteilhaft ist. Hierbei hat die Variable R die vorstehend angegebene Bedeutung.

In der allgemeinen Formel III bezeichnet die Variabele M² Bor und Aluminium, von denen Bor vorteilhaft ist. Die Variable R¹ hat die Bedeutung der Variable R oder sie bezeichnet C₁- bis C₂₀-Alkoxy und C₆- bis C₂₀-Aryloxy. Vorteilhafterweise bezeichnet die Variable R¹ C₁- bis C₁₀-Alkyl, Phenyl, C₁- bis C₁₀-Alkoxy oder Phenoxy. Die Variable X steht für Fluor, Chlor, Brom und Jod, insbesondere Chlor. Der Index n ist gleich 0 oder gleich 1 oder 2.

Beispiele gut geeigneter erfindungsgemäß anzuwendender Cokatalysatoren (B) sind C₁- bis C₁₀-Alkyllithium, Di-(C₁- bis C₁₀-alkyl)magnesium, Di-(C₁- bis C₁₀-alkyl)zink, Tri-(C₁- bis C₁₀-alkyl)boran, Tri-(C₁- bis C₁₀-alkyl)borat, Triphenylboran, Triphenylborat, Di-(C₁- bis C₁₀-alkyl)(C₁- bis C₁₀-alkoxy)-, Di-(C₁- bis C₁₀-alkyl)phenyl-, Di-(C₁- bis C₁₀-alkoxy)(C₁- bis C₁₀-alkyl)-, Di-(C₁- bis C₁₀-alkoxy)phenyl-, (C₁- bis C₁₀-Alkyl)diphenyl- und/oder (C₁- bis C₁₀-Alkoxy)diphenylboran, Tri-(C₁- bis C₁₀-alkyl)aluminium, Di-(C₁- bis C₁₀-alkyl)aluminium (C₁- bis C₁₀-alkoxid), Di- (C₁- bis C₁₀-alkyl)aluminiumchlorid und/oder (C₁- bis C₁₀-Alkyl) aluminiumdichlorid.

Beispiele besonders gut geeigneter Cokatalysatoren (B) der allgemeinen Formeln I bis III sind Butyllithium, Di-n-butylmagnesium, Butyloctylmagnesium, Ethyldichlorboran, Diethylborethoxid, Triethylboran, Diethylaluminiumchlorid, Diethylaluminiumethoxid, Ethylaluminiumdichlorid und Triethylaluminium, von denen n-Butyllithium und Triethylboran ganz besonders vorteilhaft sind und deswegen auch ganz besonders bevorzugt angewandt werden.

In der allgemeinen Formel IV haben die Variablen M, M¹, M², R und R¹ die vorstehend im Detail angegebene Bedeutung. Beispiele ganz besonders vorteilhafter Cokatalysatoren der allgemeinen Formel IV sind Lithiumtetra-n-butylborat und Lithiumtriethyl-n-butylborat, von denen letzteres besonders vorteilhaft ist und deshalb ganz besonders bevorzugt angewandt wird.

Die vorstehend im Detail beschriebenen Cokatalysatoren (B) können in den üblichen und bekannten Mengen vor der eigentlichen (Co)Polymerisation in Form einer Lösung oder einer Suspension zu dem Chromkatalysator (A) zugegeben werden. Es ist indes von Vorteil, die metallorganischen Cokatalysatoren (B) direkt in den jeweils verwendeten Polymerisationsreaktor einzudosieren.

Vor der Zugabe der Cokatalysatoren (B) kann der Chromkatalysator (A) auch noch durch Ethylen und/oder α-Olefine, Kohlenmonoxid oder Triethylboran reduziert oder durch Fluoridierung oder Silylierung modifiziert werden.

Der erfindungsgemäße Phillips-Katalysator eignet sich hervorragend für die Herstellung von Homopolymerisaten des Ethylens und Copolymerisaten des Ethylens mit α-Olefinen nach den Phillips-Verfahren. Hierbei kommen als Polymerisationsreaktoren die üblichen und bekannten Schleifenreaktoren, Autoklaven, Gasphasenreaktoren mit Rührer und Gasphasenwirbelschichtreaktoren in Betracht.

Beispiele für geeignete α-Olefinen, welche mit Ethylen copolymerisiert werden können, sind Prop-1-en, But-1-en, Pent-1-en, Hex-1-en und Oct-1-en sowie die konjugierten und nicht konjugierten Diolefine, Butadien, Penta-1,3-dien, 2,3-Dimethylbutadien, Penta-1,4-dien, Hexa-1,5-dien und Vinylcyclohexen. Im allgemeinen werden die Comonomere dem Ethylen in einer solchen Menge zugesetzt, daß Ethylencopolymerisate aus 96 bis 99,8 Gew.-% an einpolymerisiertem Ethylen und 0,2 bis 4 Gew.-% mindestens eines einpolymerisierten Comonomeren entstehen.

Der erfindungsgemäße Phillips-Katalysator weist besondere unerwartete Vorteile auf. So ist er empfindlich gegenüber der Reglerwirkung von Wasserstoff. Er eignet sich hervorragend für die Homo- und Copolymerisation des Ethylens nach den üblichen und bekannten particle-form-Verfahren in einer Suspension aus einem gesättigten Kohlenwasserstoff und Ethylen unter einem Druck von 20 bis 50, insbesondere 40 bar, und Temperaturen von 90 bis 110°C. Hierbei liefert er mit hoher Produktivität Polymerisate von vorzüglicher Morphologie, guter Verarbeitbarkeit und hoher Zähigkeit. Die Polymerisate eignen sich hervorragend für die Herstellung von Blasformkörpern.

### Beispiele und Vergleichsversuch

### Beispiel 1

### Die Herstellung eines erfindungsgemäßen Phillips-Katalysators und seine Verwendung zur Herstellung eines Ethylenhomopolymerisats

In einem 20-l-Glaskolben wurden 2 kg eines feinteiligen Aluminiumsilikat-Xerogels (verwendet wurde Aluminium-Cogel Nr. 6 der Fa. Grace, Worms) unter Stickstoff in 8 l Heptan dispergiert. Zu dieser Suspension wurden 135 g Tris-acetylacetonato-chrom(III) und 240 g (= 224 ml) Triethylphosphat hinzugegeben. Durch die Verwendung dieser Mengen an Chrom- und Phosphorverbindung resultierte ein Gehalt von 1 Gew.-% Chrom und 2 Gew.-% Phosphor im fertigen Chromkatalysator (A). Nach 30 minütigem Rühren wurde das Suspensionsmittel im Rotationsverdampfer entfernt. Die resultierende Katalysatorvorstufe (A') war ein graurotes, rieselfähiges Pulver. Dieses wurde im Luftstrom bei 600°C während 2 Stunden in einem Wirbelschichtaktivator aktiviert. Der resultierende Chromkatalysator (A) wies einen elementaranalytisch ermittelten Chromgehalt von 1 Gew.-% und einen elementaranalytisch ermittelten Phosphorgehalt von 2 Gew.-% auf. Unmittelbar nach seiner Aktivierung wurde er zur Polymerisation von Ethylen verwendet. Zu diesem Zweck wurde ein 10 l-Druckautoklav mit Rührer auf 95°C erhitzt und während 10 Minuten mit trockenem Stickstoff gespült. Hiernach wurden 60 mg einer 0,16 molaren n-Butyllithiumlösung in Heptan und 5 l Isobutan in den Druckautoklaven eingeführt. Im Anschluß daran wurde mit Ethylen im Autoklaven ein Gesamtdruck von 40 bar eingestellt. Durch Einbringen von insgesamt 500 mg des Chromkatalysators (A) mit Hilfe einer Schleuse wurde die Polymerisation gestartet und aufrechterhalten. Nach 90 minütiger Polymerisation bei einer Temperatur von 95 ± 2°C wurde der Autoklav unter Verdampfen des Isobutans und des nicht umgesetzten Ethylens entspannt, und das resultierende Polymerisat wurde entnommen.

Die Produktivität des erfindungsgemäßen Phillips-Katalysators und die anwendungstechnischen Eigenschaften des resultierenden Polymerisats werden in der Tabelle den betreffenden Werten des Vergleichsversuchs gegenübergestellt. Der Vergleich zeigt, daß der erfindungsgemäße Phillips-Katalysator in hoher Produktivität gut verarbeitbare, hochzähe Ethylenhomopolymerisate liefert.

### Beispiel 2

Die Herstellung eines erfindungsgemäßen Phillips-Katalysators und seine Verwendung zur Herstellung eines Ethylenhomopolymerisats.

Beispiel 1 wurde wiederholt, nur daß anstelle des Suspensionsmittels Heptan Methanol verwendet wurde. Die Produktivität des resultierenden erfindungsgemäßen Phillips-Katalysators und die anwendungstechnischen Eigenschaften des hiermit hergestellten Ethylenhomopolymerisats finden sich gleichfalls in der Tabelle. Auch hier zeigt der Vergleich mit den betreffenden Werten des Vergleichsversuchs, daß der erfindungsgemäße Phillips-Katalysator und das hiermit hergestellte Ethylenhomopolymerisat dem Stand der Technik überlegen sind.

### Beispiel 3

Die Herstellung eines erfindungsgemäßen Phillips-Katalysators und seine Verwendung zur Herstellung eines Ethylencopolymerisats.

Beispiel 1 wurde wiederholt, nur daß in den Druckautoklaven noch 100 ml Hex-1-en zugeführt wurden.

Die Produktivität des resultierenden erfindungsgemäßen Phillips-Katalysators und die anwendungstechnischen Eigenschaften des hiermit hergestellten Ethylen-Hexen-Copolymerisats finden sich gleichfalls in der Tabelle. Der Vergleich mit den betreffenden Werten des Vergleichsversuchs untermauert erneut die Vorteilhaftigkeit des erfindungsgemäßen Phillips-Katalysators: Obwohl es sich hier um ein Copolymerisat niedriger Dichte handelt, reichen die Zähigkeitswerte schon fast an die des Vergleichsversuchs heran.

### Vergleichsversuch

### Die Herstellung eines bekannten Phillips-Katalysators und seine Verwendung zur Herstellung eines Ethylenhomopolymerisats

Beispiel 1 wurde wiederholt, nur daß anstelle des erfindungsgemäßen Chromkatalysators (A) ein in folgender Weise hergestellter bekannter Chromkatalysator verwendet wurde:
In einem 20 l-Glaskolben wurden unter Stickstoff 7 l Methylenchlorid und 40 g Chromtrioxid vorgelegt. Hierzu dosierte man über einen Tropftrichter 240 g (= 224 ml) Phosphorsäuretriethylester. Die resultierende Reaktionsmischung wurde von gegebenenfalls noch vorhandenen Feststoffresten abfiltriert. Die resultierende Lösung wurde auf 2 kg Aluminiumsilikat-Xerogel (Aluminium-Cogel Nr. 6 der Fa. Grace, Worms) gegossen. Nach 30 minütigem Rühren der hierbei erhaltenen Suspension wurde das Suspensionsmittel am Rotationsverdampfer entfernt. Die resultierende Katalysatorvorstufe (A') wurde, wie bei Beispiel 1 beschrieben, zu dem bekannten Chromkatalysator weiterverarbeitet.

Die Polymerisation wurde analog zu Beispiel 1 durchgeführt.

Die Produktivität des bekannten Chromkatalysators und die anwendungstechnischen Eigenschaften des hiermit hergestellten Ethylenpolymerisats werden in der Tabelle den betreffenden Werten der Beispiele 1 bis 3 gegenübergestellt. Der Vergleich untermauert die Überlegenheit des erfindungsgemäßen Phillips-Katalysators.

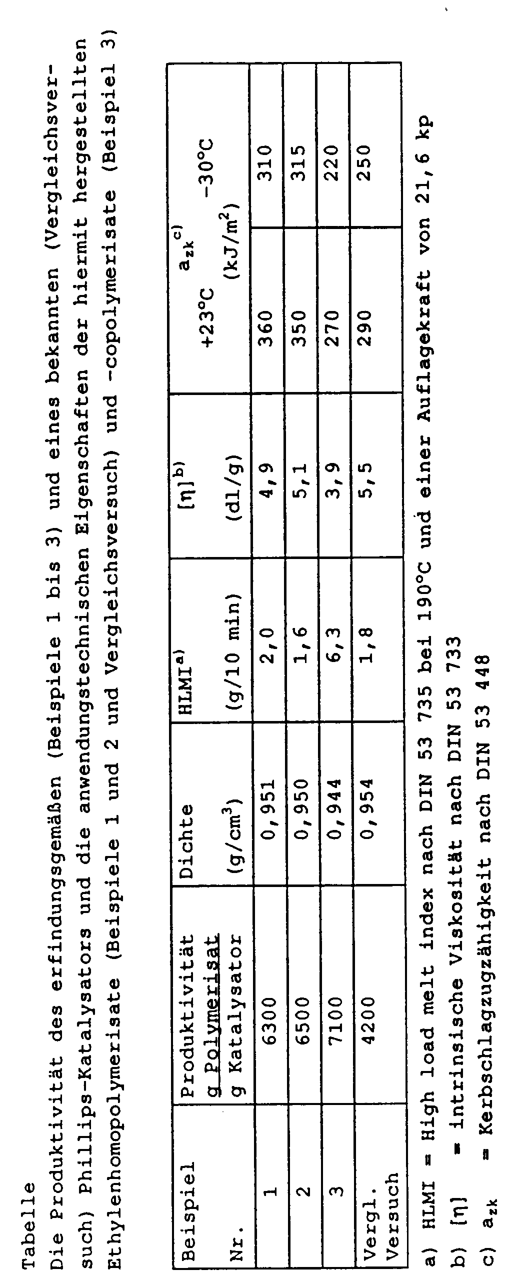

## Patentansprüche

1. Phillips-Katalysator für die Homopolymerisation von Ethylen und die Copolymerisation von Ethylen mit α-Olefinen, enthaltend als katalytisch wirksame Komponenten
A) einen feinteiligen, Aluminiumsilikat-geträgerten, phosphorhaltigen Chromkatalysator, herstellbar, indem man
(1) mindestens eine organische Phosphor (III)-, -(IV)- und/oder -(V)-Verbindung und mindestens eine Chrom(III)-Verbindung, welche mit den besagten Phosphorverbindungen unter den angewandten Reaktionsbedingungen nicht reagiert, in beliebiger Reihenfolge nacheinander oder gleichzeitig auf ein feinteiliges Aluminiumsilikat-Hydrogel oder -Xerogel mit einer Teilchengröße im Bereich von 1 bis 2000 µm unter Bildung einer Katalysatorvorstufe (A') aufträgt und
(2) die Katalysatorvorstufe (A') bei höheren Temperaturen in einer oxidierenden Atmosphäre aktiviert, wodurch der Chromkatalysator (A) mit einem Atomverhältnis von Chrom:Phosphor von 20:1 bis 1:20, einem Gehalt an Chrom zwischen 0,01 und 5 Gew.-% und einem Gehalt an Phosphor zwischen 0,01 und 5 Gew.-% entsteht,
und
B) mindestens eine Verbindung der allgemeinen Formeln I bis IV,
MR (I)
M¹R² (II)
M²R¹₃₋ₙXₙ (III)
MM²RR¹₃ (IV)
worin der Index und die Variablen die folgende Bedeutung haben:
M Lithium, Natrium und Kalium,
M¹ Magnesium und Zink,
M² Bor und Aluminium,
R C₁- bis C₂₀-Alkyl und C₆- bis C₂₀-Aryl,
R¹ R und C₁- bis C₂₀-Alkoxy und C₆- bis C₂₀-Aryloxy,
X Fluor, Chlor, Brom und Jod,
n 0, 1 und 2;
als Cokatalysator.

2. Der Phillips-Katalysator nach Anspruch 1, dadurch gekennzeichnet, daß es sich bei der Chrom(III)-Verbindung um wasserlösliche Salze des dreiwertigen Chroms oder um Chrom(III)-Chelatkomplexe, bei den organischen Phosphor(III)-Verbindungen um Phosphorigsäureester, den organischen Phosphor(IV)-Verbindungen um Phosphonsäureester und bei den organischen Phosphor(V)-Verbindungen um Phosphorsäureester handelt.

3. Der Phillips-Katalysator nach Anspruch 2, dadurch gekennzeichnet, daß man als Phosphorsäureester Triethylphosphat und als Chrom(III)-Chelatkomplex Tris-acetylacetonato-chrom(III) verwendet.

4. Der Phillips-Katalysator nach einem der Ansprüche 1 bis 3, dadurch gekennzeichnet, daß man als Cokatalysator (B) mindestens eine Verbindung der allgemeinen Formeln I bis IV verwendet, worin die Variablen M, M², R, R¹ und X die folgende Bedeutung haben:
M Lithium,
M² Bor,
R C₁- bis C₁₀-Alkyl und Phenyl,
R¹ C₁- bis C₁₀-Alkyl, Phenyl, C₁- bis C₁₀-Alkoxy und Phenoxy,
X Chlor.

5. Der Phillips-Katalysator nach einem der Ansprüche 1 bis 4, dadurch gekennzeichnet, daß man als Cokatalysatoren (B) C₁- bis C₁₀-Alkyllithium, Di-(C₁- bis C₁₀-alkyl)magnesium, Di-(C₁- bis C₁₀-alkyl)zink, Tri-(C₁- bis C₁₀-alkyl)boran, Tri-(C₁- bis C₁₀-alkyl)borat, Triphenylboran, Triphenylborat, Di-(C₁- bis C₁₀-alkyl)(C₁- bis C₁₀-alkoxy)-, Di-(C₁- bis C₁₀-alkyl)phenyl-, Di-(C₁- bis C₁₀-alkoxy)(C₁- bis C₁₀-alkyl)-, Di-(C₁- bis C₁₀-alkoxy)phenyl-, (C₁- bis C₁₀-Alkyl)-diphenyl- und/oder (C₁- bis C₁₀-Alkoxy)diphenylboran, Tri-(C₁- bis C₁₀-alkyl)aluminium, Di-(C₁- bis C₁₀-alkyl)aluminium(C₁- bis C₁₀-alkoxid), Di-(C₁- bis C₁₀-alkyl)aluminiumchlorid und/oder (C₁- bis C₁₀-Alkyl)aluminiumdichlorid verwendet.

6. Der Phillips-Katalysator nach einem der Ansprüche 1 bis 5, dadurch gekennzeichnet, daß man als Cokatalysator (B) Triethylboran oder Butyllithium verwendet.

7. Der Phillips-Katalysator nach einem der Ansprüche 1 bis 5, dadurch gekennzeichnet, daß man als Cokatalysator (B) Triethylboran und Butyllithium im Molverhältnis von 4:1 bis 1:4 verwendet.

8. Verfahren zur Herstellung von Ethylenhomopolymerisaten oder -copolymerisaten mit α-Olefinen durch Polymerisation von Ethylen oder von Gemischen aus Ethylen und α-Olefinen mit Hilfe von Phillips-Katalysatoren, dadurch gekennzeichnet, daß man hierbei Phillips-Katalysatoren gemäß einem der Ansprüche 1 bis 7 verwendet.

9. Das Verfahren nach Anspruch 8, dadurch gekennzeichnet, daß man in der Gegenwart von Wasserstoff (co)polymerisiert.

## Claims

1. A Phillips catalyst for the homopolymerization of ethylene and the copolymerization of ethylene with α-olefins, containing, as catalytically active components,
A) a finely divided, aluminum silicate-supported, phosphorus-containing chromium catalyst, preparable by
(1) applying at least one organic phosphorus(III), (IV) and/or (V) compound and at least one chromium(III) compound, which does not react with said phosphorus compounds under the reaction conditions used, successively in any order or simultaneously, to a finely divided aluminum silicate hydrogel or xerogel having a particle size of from 1 to 2,000 µm with formation of a catalyst intermediate (A') and
(2) activating the catalyst intermediate (A') at elevated temperatures in an oxidizing atmosphere, with the result that the chromium catalyst (A) forms with an atomic ratio of chromium to phosphorus of from 20:1 to 1:20, a chromium content of from 0.01 to 5% by weight and a phosphorus content of from 0.01 to 5% by weight,
and
B) at least one compound of the general formulae I to IV
MR (I)
M¹R² (II)
M²R¹₃₋ₙXₙ (III)
MM²RR¹₃ (IV)
where M is lithium, sodium or potassium, M¹ is magnesium or zinc, M² is boron or aluminum, R is C₁-C₂₀-alkyl or C₆-C₂₀-aryl, R¹ is R, C₁-C₂₀-alkoxy or C₆-C₂₀-aryloxy, X is fluorine, chlorine, bromine or iodine and n is 0, 1 or 2, as a cocatalyst.

2. A Phillips catalyst as claimed in claim 1, wherein the chromium(III) compound is a water-soluble salt of trivalent chromium or a chromium(III) chelate complex, the organic phosphorus(III) compound is a phosphite, the organic phosphorus(IV) compound is a phosphonate and the organic phosphorus(V) compound is a phosphate.

3. A Phillips catalyst as claimed in claim 2, wherein the phosphate used is triethyl phosphate and the chromium(III) chelate complex used is trisacetylacetonatochromium(III).

4. A Phillips catalyst as claimed in any of claims 1 to 3, wherein at least one compound of the general formulae I to IV, where M is lithium, M² is boron, R is C₁-C₁₀-alkyl or phenyl, R¹ is C₁-C₁₀-alkyl, phenyl, C₁-C₁₀-alkoxy or phenoxy and X is chlorine, is used as cocatalyst (B).

5. A Phillips catalyst as claimed in any of claims 1 to 4, wherein the cocatalyst (B) used is C₁-C₁₀-alkyllithium, di-C₁-C₁₀-alkylmagnesium, di-C₁-C₁₀-alkylzinc, tri-C₁-C₁₀-alkylborane, tri-C₁-C₁₀-alkyl borate, triphenylborane, triphenyl borate, di-(C₁-C₁₀-alkyl)(C₁-C₁₀-alkoxy)-, di-(C₁-C₁₀-alkyl)phenyl-, di-(C₁-C₁₀-alkoxy)(C₁-C₁₀-alkyl)-, di-(C₁-C₁₀-alkoxy)phenyl-, (C₁-C₁₀alkyl)-diphenyl- and/or (C₁-C₁₀-alkoxy)diphenylborane, tri-C₁-C₁₀-alkylaluminum, di-C₁-C₁₀-alkylaluminum C₁-C₁₀-alkoxide, di-C₁-C₁₀-alkylaluminum chloride or C₁-C₁₀-alkylaluminum dichloride.

6. A Phillips catalyst as claimed in any of claims 1 to 5, wherein the cocatalyst (B) used is triethylborane or butyllithium.

7. A Phillips catalyst as claimed in any of claims 1 to 5, wherein triethylborane and butyllithium in a molar ratio of from 4 : 1 to 1 : 4 are used as cocatalyst (B).

8. A process for the preparation of an ethylene homopolymer or of an ethylene copolymer with α-olefins by polymerization of ethylene or of a mixture of ethylene and α-olefins with the aid of a Phillips catalyst, wherein a Phillips catalyst as claimed in any of claims 1 to 7 is used.

9. A process as claimed in claim 8, wherein (co)polymerization is carried out in the presence of hydrogen.

## Revendications

1. Catalyseur de Phillips pour l'homopolymérisation d'éthylène et la copolymérisation d'éthylène avec des α-oléfines, contenant comme composants actifs sur le plan catalytique
A) un catalyseur au chrome contenant du phosphore, sur support de silicate d'aluminium, en fines particules, que l'on prépare en
(1) appliquant, avec formation d'un précurseur de catalyseur (A'), sur un hydrogel ou un xérogel de silicate d'aluminium finement divisé ayant une granulométrie comprise entre 1 et 2000 µm, au moins un composé organique du phosphore (III), (IV) et/ou (V) et au moins un composé du chrome (III) qui ne réagit pas avec les composés du phosphore considérés dans les conditions de réaction utilisées, l'un après l'autre dans un ordre quelconque ou simultanément, et
(2) activant le précurseur de catalyseur (A') à température élevée dans une atmosphère oxydante, avec formation du catalyseur au chrome (A) ayant un rapport atomique du chrome au phosphore de 20:1 à 1:20, une teneur en chrome comprise entre 0,01 et 5% en poids et une teneur en phosphore comprise en 0,01 et 5% en poids,
et
(B) au moins un composé de formules générales I à IV,
MR (I)
M¹R² (II)
M²R¹₃₋ₙXₙ (III)
MM²RR¹₃ (IV)
dans lesquelles les indices et les variables ont les significations suivantes:
M lithium, sodium et potassium,
M¹ Magnésium et zinc,
M² bore et aluminium,
R alkyle en C₁-C₂₀ et aryle en C₆-C₂₀,
R¹ R et alcoxy en C₁-C₂₀ et aryloxy en C₆-C₂₀,
X fluor, chlore, brome et iode
n 0, 1 et 2;
en tant que co-catalyseur.

2. Catalyseur de Phillips selon la revendication 1, caractérisé en ce que le composé du chrome (III) consiste en des sels solubles dans l'eau du chrome trivalent ou en des complexes chélatés du chrome (III), les composés organiques du phosphore (III) consistent en esters d'acide phosphoreux, les composés organiques du phosphore (IV) consistent en des esters d'acide phosphonique et les composés organiques du phosphore (V) consistent en des esters d'acide phosphorique.

3. Catalyseur de Phillips selon la revendication 2, caractérisé en ce qu'on utilise comme esters d'acide phosphorique, le phosphate de triéthyle et comme complexes chélatés du chrome (III) le tris[acétylacétonato]chrome (III).

4. Catalyseur de Phillips selon l'une quelconque des revendications 1 à 3, caractérisé en ce qu'on utilise comme co-catalyseur (B) au moins un composé de formules générales I à IV dans lesquelles les variables M, M², R, R¹ et X ont les significations suivantes :
M lithium,
M² bore,
R alkyle en C₁-C₁₀ et phényle,
R¹ alkyle en C₁-C₁₀, phényle, alcoxy en C₁-C₁₀ et phénoxy,
X chlore.

5. Catalyseur de Phillips selon l'une quelconque des revendications 1 a 4, caractérisé en ce qu'on utilise comme co-catalyseur (B) les alkyllithium en C₁-C₁₀, di(alkyl en C₁-C₁₀)magnésium, di(alkyl en C₁-C₁₀)zinc, tri(alkyl en C₁-C₁₀)borane, borate de tri(alkyl en C₁-C₁₀), triphénylborane, borate de triphényle, di(alkyl en C₁-C₁₀) (alcoxy en C₁-C₁₀)-, di(alkyl en C₁-C₁₀)phényl-, di(alcoxy en C₁-C₁₀) (alkyl en C₁-C₁₀)-, di(alcoxy en C₁-C₁₀)phényl-, (alkyl en C₁-C₁₀)diphényl-et/ou (alcoxy en C₁-C₁₀)diphénylborane, tri(alkyl en C₁-C₁₀)aluminium, alcoolate en C₁-C₁₀ de di(alkyl en C₁-C₁₀)aluminium, chlorure de di(alkyl en C₁-C₁₀)aluminium et/ou dichlorure de (alkyl en C₁-C₁₀)aluminium.

6. Catalyseur de Phillips selon l'une quelconque des revendications 1 à 5, caractérisé en ce qu'on utilise comme co-catalyseur (B) du triéthylborane ou du butyllithium.

7. Catalyseur de Phillips selon l'une quelconque des revendications 1 a 5, caractérisé en ce qu'on utilise comme co-catalyseur (B) du triéthylborane et du butyllithium dans un rapport molaire de 4:1 à 1:4.

8. Procédé de préparation d'homopolymères ou de copolymères d'éthylène avec des α-oléfines par polymérisation d'éthylène ou de mélanges d'éthylène et d'α-oléfines à l'aide de catalyseurs de Phillips, caractérisé en ce qu'on utilise ici un catalyseur de Phillips selon l'une quelconque des revendications 1 à 7.

9. Procédé selon la revendication 8, caractérisé en ce que l'on (co)polymérise en présence d'hydrogène.
